# FASCICULE DE BREVET EUROPEEN

(11) **EP 2 031 254 B1**
(45) Date de publication et mention de la délivrance du brevet: **15.09.2010**
(21) Numéro de dépôt: 08161462.0
(22) Date de dépôt: 30.07.2008
(51) Int. Cl.: F04D 29/16, F04D 29/56, F01D 11/00, F01D 17/16

(54) **Étage redresseur de compresseur de turbomachine comprenant une aube à calage variable**
Leitschaufelstufe für den Verdichter einer Turbomaschine mit einer Schaufel mit verstellbarem Einstellwinkel
Stator stage for the compressor of a turbomachine with a variable pitch guide vane

(30) Priorité: 30.08.2007 FR 0706074
(43) Date de publication de la demande: 04.03.2009
(73) Titulaire: Snecma, 75015 Paris (FR)
(72) Inventeur: Cloarec, Yvon, 77250 Ecuelles (FR)
(74) Mandataire: Ramey, Daniel

(56) Documents cités:
- EP-A- 0 780 544
- EP-A- 1 031 703
- EP-A- 1 120 546
- FR-A- 2 582 720
- US-A1- 2002 154 991

## Description

La présente invention concerne une aube à calage variable ainsi qu'un étage redresseur d'aubes à calage variable pour une turbomachine telle qu'un turboréacteur ou un turbopropulseur d'avion.

Dans une turbomachine, des étages d'aubes de redresseur à calage variable sont montés entre des roues mobiles d'un compresseur. Ces aubes à calage variable sont portées par un carter du stator et sont réglables en position autour de leurs axes pour optimiser l'écoulement des gaz dans le moteur de la turbomachine.

Dans la technique actuelle, une aube à calage variable comprend un pivot axial sensiblement cylindrique à chacune de ses extrémités, ces pivots définissant l'axe de rotation de l'aube (voir par exemple le document EP=A1-0 780 544). Le pivot radialement externe appelé pivot de commande est engagé dans le logement d'une cheminée sensiblement radiale ou légèrement inclinée d'un carter de la turbomachine et est relié par un levier à un anneau de commande actionné par un vérin, un moteur électrique, ou analogue. La rotation de l'anneau de commande est transmise par les leviers aux pivots externes des aubes et les fait tourner autour de leurs axes.

Le pivot radialement interne appelé pivot de guidage est engagé dans un logement sensiblement radial ou légèrement incliné d'un anneau interne monté sur une virole annulaire portant des blocs de matière abradable. Ces blocs de matière abradable sont destinés à coopérer avec des léchettes annulaires prévues sur le rotor de la turbomachine pour limiter les recirculations d'air d'amont en aval et d'aval en amont radialement à l'intérieur de l'anneau.

Le cycle de fonctionnement de la turbomachine comprend des régimes transitoires conduisant à des déplacements relatifs en direction axiale et radiale entre le rotor et le stator, qui se traduisent par une usure importante des blocs de matière abradable par frottement des léchettes du rotor sur ces blocs.

Lors de la phase de décollage par exemple, le rotor se déplace en direction radiale vers le stator et les léchettes pénètrent profondément dans les blocs de matière abradable formant des tranchées annulaires sur ces blocs. Les déplacements relatifs entre le rotor et le stator conduisent à un élargissement axial de ces tranchées. Pendant le régime de croisière, les léchettes sont situées en retrait radial de ces blocs et en vis-à-vis des tranchées préalablement formées, ce qui se traduit par des jeux radiaux importants entre les sommets des léchettes et les blocs de matière abradable, et donc par une faible efficacité du joint à labyrinthe formé par les léchettes du rotor.

Par ailleurs, les déplacements relatifs en direction axiale entre le rotor et le stator sont difficiles à prévoir. Pour éviter que le rotor et le stator ne viennent en contact l'un contre l'autre pendant les régimes transitoires précités, on augmente en général les jeux axiaux entre le rotor et le stator. Cependant, cette solution n'est pas satisfaisante car elle entraîne une augmentation de la dimension axiale du moteur et de la masse de la turbomachine.

L'invention a notamment pour but d'apporter une solution simple, efficace et économique à ces problèmes.

Elle propose à cet effet un étage redresseur de compresseur de turbomachine, comprenant une rangée annulaire d'aubes à calage variable, chaque aube comprenant un pivot cylindrique externe définissant l'axe de rotation de l'aube et engagé dans une cheminée sensiblement radiale d'un carter externe, et un pivot cylindrique interne monté dans un logement correspondant d'un anneau interne, par un système rotulant ou basculant, caractérisé en ce que le pivot interne de chaque aube s'étend le long d'un axe sensiblement parallèle à l'axe de rotation de l'aube et à distance de cet axe.

Chaque aube de l'étage redresseur diffère de la technique antérieure en ce que l'axe du pivot interne n'est pas aligné et confondu avec l'axe de rotation défini par le pivot externe de l'aube. Ce désalignement des axes des pivots permet de déplacer axialement l'anneau interne monté sur le pivot interne de l'aube, lors du déplacement angulaire de cette aube autour de son axe de rotation.

En effet, chaque aube agit comme une bielle ou une manivelle comportant à ses extrémités des pivots cylindriques sensiblement parallèles, un pivot externe porté par un carter du stator et un pivot interne monté sur un anneau interne. Le déplacement en rotation de l'aube autour de l'axe du pivot externe entraîne le déplacement en rotation du pivot interne autour de cet axe et un déplacement correspondant de l'anneau, ce déplacement de l'anneau comportant au moins une composante axiale. La course axiale de l'anneau interne dépend notamment du débattement angulaire maximal de l'aube et de la distance axiale entre les axes des pivots interne et externe de cette aube.

Cette invention présente de nombreux avantages :
- le déplacement axial de l'anneau interne permet de faire varier en fonctionnement la position relative des blocs de matière abradable et des léchettes. Il est ainsi possible, pendant le régime de croisière par exemple, de déplacer les blocs de matière abradable axialement vers l'amont ou vers l'aval de façon à ce que les léchettes ne soient pas situées en vis-à-vis de tranchées du bloc mais au contraire en face de surfaces non ou moins usées de ce bloc. Les jeux radiaux entre les léchettes et les blocs de matière abradable peuvent donc être mieux optimisés et réglés en fonction des différents régimes de fonctionnement de la turbomachine ;
- le déplacement axial de l'anneau interne peut également être contrôlé pour suivre les déplacements axiaux du rotor de la turbomachine pendant les différents régimes de fonctionnement. Ceci permet d'optimiser les jeux axiaux entre l'anneau interne et le rotor et de diminuer la dimension axiale et la masse de la turbomachine. La meilleure maîtrise des jeux permet aussi de diminuer le nombre de léchettes du rotor, par exemple de trois à deux par étage, ces léchettes étant coûteuses.

Selon un mode de réalisation de l'invention, l'axe du pivot interne de l'aube est situé dans un plan passant sensiblement par l'axe de rotation de l'aube, et par le bord d'attaque et/ou le bord de fuite de l'aube. L'axe du pivot interne peut être situé entre l'axe de rotation de l'aube et le bord de fuite de l'aube. En variante, l'axe du pivot interne est situé entre l'axe de rotation de l'aube et le bord d'attaque de l'aube.

Ces différentes configurations permettent de déplacer l'anneau interne axialement vers l'amont et/ou vers l'aval dans la turbomachine par rotation des aubes. De manière générale, la position de l'axe du pivot interne par rapport à celle du pivot externe de l'aube est déterminée en fonction de la course axiale de l'anneau interne que l'on souhaite obtenir. Dans certains cas, pour un débattement angulaire donné des aubes autour de leurs axes de rotation, l'anneau interne peut adopter deux positions extrêmes amont (ou aval) et une position intermédiaire aval (ou amont, respectivement).

Le déplacement en rotation de l'aube entraîne un déplacement de l'anneau interne qui peut avoir une composante axiale et une composante tangentielle. Il peut s'avérer nécessaire dans certains cas de monter le pivot interne de l'aube dans le logement de l'anneau interne par une liaison rotulante ou basculante pour autoriser le déplacement axial de l'anneau et éviter l'apparition de contraintes au niveau du pivot interne de l'aube.

Le système rotulant comprend par exemple une douille à rotule réalisée en matériau à coefficient de friction optimal déterminé en fonction des conditions environnementales d'utilisation, cette douille à rotule étant engagée sur le pivot interne de l'aube et montée dans le logement de l'anneau.

Avantageusement, le pivot interne de l'aube est monté axialement coulissant dans la douille à rotule.

L'invention concerne également une turbomachine, telle qu'un turboréacteur ou un turbopropulseur d'avion, caractérisée en ce qu'elle comprend au moins un étage redresseur d'aubes à calage variable du type précité.

L'invention sera mieux comprise et d'autres caractéristiques, détails et avantages de l'invention apparaîtront à la lecture de la description suivante faite à titre d'exemple non limitatif et en référence aux dessins annexés dans lesquels :
- la figure 1 est une demi-vue schématique en coupe axiale d'un étage d'aubes à calage variable d'un compresseur haute-pression de turbomachine, selon la technique antérieure,
- la figure 2 est une vue schématique de côté d'une aube à calage variable selon l'invention ;
- la figure 3 est une vue à plus grande échelle du pivot interne de l'aube de la figure 2,
- la figure 4 est une vue schématique de dessous d'une autre aube à calage variable selon l'invention.

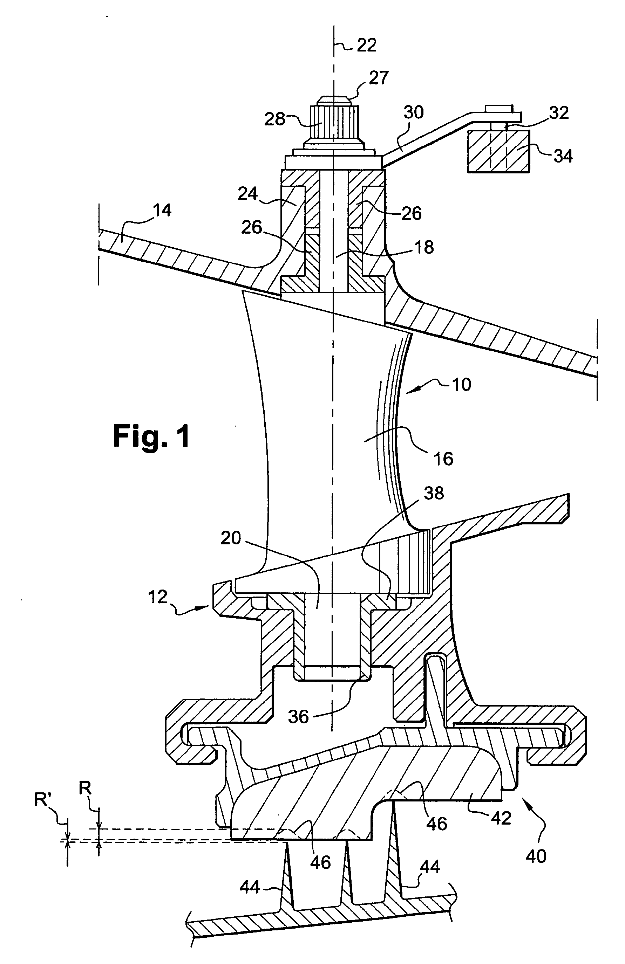

En figure 1, on a représenté un étage redresseur d'aubes 10 à calage variable d'un compresseur haute-pression de turbomachine, ces aubes 10 étant réparties autour de l'axe de la turbomachine et s'étendant entre un anneau interne 12 et un carter externe 14 de la turbomachine.

Chaque aube 10 comprend une pale 16 reliée à chacune de ses extrémités radialement interne et externe à un pivot cylindrique radial 18, 20 qui s'étend le long de l'axe 22 de rotation de l'aube.

Le pivot cylindrique externe 18 ou pivot de commande est engagé dans le logement d'une cheminée cylindrique 24 du carter et est centré et guidé en rotation dans cette cheminée par des bagues cylindriques 26 montées autour du pivot externe 18.

L'extrémité radialement externe 27 du pivot externe 18 est fixée au moyen d'un écrou 28 à une extrémité d'un levier de commande 30. L'autre extrémité du levier de commande 30 porte un doigt 32 qui est guidé en rotation dans un anneau de commande 34 qui s'étend autour de l'axe de la turbomachine, à l'extérieur du carter 14. Un déplacement angulaire de l'anneau de commande 34 autour de l'axe de la turbomachine se traduit par une rotation des leviers de commande 30 autour des axes 22 et par l'entraînement en rotation des aubes 10 à calage variable autour de ces axes.

Le pivot cylindrique interne 20 ou pivot de guidage est engagé dans un logement cylindrique de l'anneau interne 12 et est centré et guidé en rotation dans ce logement par une douille cylindrique 36 qui comprend à son extrémité radialement externe un rebord annulaire externe 38 intercalé entre l'extrémité radialement interne de la pale 16 de l'aube et un épaulement annulaire de l'anneau 12.

L'anneau interne 12 est sectorisé et les secteurs d'anneau sont maintenus radialement sur les pivots internes 20 des aubes par des moyens appropriés. Cet anneau 12 porte à son extrémité radialement interne une virole annulaire 40 également sectorisée à la périphérie interne de laquelle sont fixés des blocs 42 de matière abradable. Ces blocs 42 sont destinés à coopérer avec des léchettes annulaires radiales 44 du rotor de la turbomachine pour limiter le passage d'air axialement d'amont en aval et d'aval en amont à l'intérieur de l'anneau interne.

En variante, l'anneau interne 12 est formé d'une seule pièce et peut porter directement à sa périphérie interne un élément annulaire monobloc 42 en matériau abradable.

Lors du fonctionnement de la turbomachine, des déplacements relatifs axiaux et radiaux entre le rotor et le stator du moteur provoquent le frottement des sommets des léchettes 44 sur des surfaces internes des blocs de matière abradable 42, ce qui entraîne la formation de tranchées annulaires 46 dans les blocs et se traduit par une augmentation des jeux radiaux R entre les sommets des léchettes et les blocs 42 et une diminution des performances de la turbomachine.

L'invention permet de remédier au moins en partie à ces problèmes grâce au déplacement axial de l'anneau interne 12, vers l'amont ou vers l'aval, de façon à ce que les sommets des léchettes 44 soient situées en regard de surfaces internes non ou moins usées des blocs 42, conduisant ainsi à des jeux radiaux R' optimaux et à de plus faibles recirculations d'air radialement à l'intérieur de l'anneau 12. Ce résultat est obtenu par le désalignement des axes du pivot interne 20 et du pivot externe 18, l'axe du pivot externe formant l'axe 22 de rotation de l'aube.

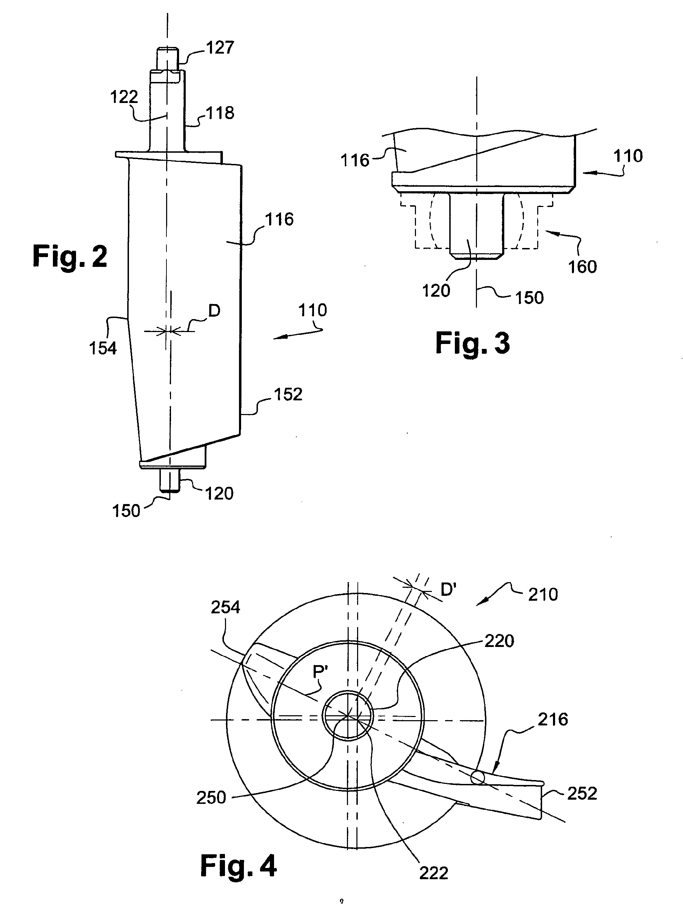

On a représenté des exemples de réalisation de l'invention aux figures 2 à 4, dans lesquelles les éléments déjà décrits en référence à la figure 1 sont désignés par les mêmes chiffres augmentés de 100 ou de 200.

Dans l'exemple de réalisation représenté en figure 2, l'axe 150 du pivot interne 120 s'étend sensiblement parallèlement et à faible distance axiale D de l'axe 122 de rotation de l'aube 110. Dans cet exemple, les axes 122 et 150 sont situés dans un plan (qui est le plan du dessin) passant par les bords d'attaque 154 et de fuite 152 de l'aube.

L'axe 150 du pivot interne est situé dans le plan précité entre l'axe 122 du pivot externe et le bord de fuite 152. Lors du calage angulaire de l'aube 10, le pivot interne 120 est déplacé en rotation autour de l'axe 122 de rotation de l'aube, ce qui provoque un déplacement axial de l'anneau interne. Dans la position intermédiaire de calage de l'aube, l'anneau interne a une position aval ou reculée maximale, et dans chacune des positions extrêmes de débattement, cet anneau a une position amont ou avancée maximale. Comme cela a été vu dans ce qui précède, la course axiale de l'anneau 12 dépend notamment du débattement angulaire maximal de l'aube et de la distance D entre les axes 122 et 150.

Dans la variante représentée en figure 4, l'axe 250 du pivot interne s'étend sensiblement dans un plan P' passant par les bords de fuite 252 et d'attaque 254 de l'aube, et il est situé entre l'axe 222 de rotation de l'aube et le bord d'attaque 254. Les axes 250 et 222 s'étendent à une faible distance axiale D' l'un de l'autre. Dans cet exemple de réalisation, dans la position intermédiaire de calage de l'aube, l'anneau interne a une position amont ou avancée maximale, et dans chacune des positions extrêmes de débattement, cet anneau a une position aval ou reculée maximale.

Les distances D et D' entre les axes des pivots interne et externe sont de quelques millimètres environ de sorte que l'anneau interne puisse être déplacé en direction axiale sur une distance de quelques millimètres par exemple. Les valeurs de ces distances D et D' dépendent notamment de la taille de la turbomachine.

Lors du calage angulaire des aubes, l'anneau interne peut se déplacer en direction axiale et en direction tangentielle sur de courtes distances. Pour autoriser ces déplacements et empêcher l'apparition de contraintes au niveau du pivot interne de chaque aube, il est préférable de remplacer la douille cylindrique 36 de la technique antérieure par une douille à rotule.

Dans l'exemple représenté en figure 3, la douille à rotule 160 comprend un premier élément interne rotulant monté axialement coulissant sur le pivot interne 120 de l'aube et un second élément externe engagé dans un logement correspondant de l'anneau. Ce second élément comporte un rebord annulaire externe destiné à être interposé entre l'extrémité radialement interne de la pale 116 de l'aube et l'épaulement annulaire de l'anneau 12 (figure 1).

Bien entendu, l'invention n'est pas limitée aux modes de réalisation qui ont été décrits dans ce qui précède et représentés dans les dessins annexés. L'axe 150, 250 du pivot interne de l'aube pourrait par exemple s'étendre en dehors du plan passant par l'axe 122 de rotation de l'aube et par le bord d'attaque et/ou de fuite de cette aube.

## Revendications

1. Etage redresseur de compresseur de turbomachine, comprenant une rangée annulaire d'aubes à calage variable (110), chaque aube comprenant un pivot cylindrique externe (118) définissant l'axe (122) de rotation de l'aube et engagé dans une cheminée sensiblement radiale (24) d'un carter externe (14), et un pivot cylindrique interne (120) monté dans un logement correspondant d'un anneau interne (12), par un système rotulant (160) ou basculant **caractérisé en ce que** le pivot interne (120) de chaque aube s'étend le long d'un axe (150) sensiblement parallèle à l'axe de rotation de l'aube et à distance de cet axe.

2. Etage redresseur selon la revendication 1, **caractérisé en ce que** l'axe (150) du pivot interne (120) de chaque aube est situé dans un plan passant sensiblement par l'axe (122) de rotation de l'aube et par le bord d'attaque (154) et/ou le bord de fuite (152) de l'aube.

3. Etage redresseur selon la revendication 2, **caractérisé en ce que** l'axe (150) du pivot interne (120) de chaque aube est situé entre l'axe (122) de rotation de l'aube et le bord de fuite (152) de l'aube.

4. Etage redresseur selon la revendication 2, **caractérisé en ce que** l'axe (150) du pivot interne (120) de chaque aube est situé entre l'axe (122) de rotation de l'aube et le bord d'attaque (154) de l'aube.

5. Etage redresseur selon l'une des revendications précédentes, **caractérisé en ce que** le système rotulant comprend une douille à rotule (160) réalisée en matériau à coefficient de friction optimal, cette douille à rotule étant engagée sur le pivot interne (120) de l'aube et montée dans le logement de l'anneau.

6. Etage redresseur selon la revendication 5, **caractérisé en ce que** le pivot interne (120) de l'aube est monté axialement coulissant dans la douille à rotule (160).

7. Turbomachine, telle qu'un turboréacteur ou un turbopropulseur d'avion, **caractérisée en ce qu'**elle comprend au moins un étage redresseur d'aubes à calage variable selon l'une des revendications précédentes.

## Claims

1. A stator stage of a compressor of a turbomachine, comprising an annular row of variable-pitch vanes (110), each vane comprising an external cylindrical pivot (118) which defines the axis (122) of rotation of the vane and is fitted into a substantially radial duct (24) of an external casing (14), and an internal cylindrical pivot (120) mounted in a corresponding housing of an internal ring (12) by a swiveling or tilting system (160), **characterized in that** the internal pivot (120) of each vane extends along an axis (150) substantially parallel to the axis of rotation of the vane and at a distance from this axis.

2. The stator stage as claimed in claim 1, **characterized in that** the axis (150) of the internal pivot (120) of each vane is situated in a plane passing substantially through the axis (122) of rotation of the vane and through the leading edge (154) and/or the trailing edge (152) of the vane.

3. The stator stage as claimed in claim 2, **characterized in that** the axis (150) of the internal pivot (120) of each vane is situated between the axis (122) of rotation of the vane and the trailing edge (152) of the vane.

4. The stator stage as claimed in claim 2, **characterized in that** the axis (150) of the internal pivot (120) of each vane is situated between the axis (122) of rotation of the vane and the leading edge (154) of the vane.

5. The stator stage as claimed in any one of preceding claims, **characterized in that** the swiveling system comprises a ball sleeve (160) made of material with an optimum coefficient of friction, this ball sleeve being fitted onto the internal pivot (120) of the vane and mounted in the housing of the ring.

6. The stator stage as claimed in claim 5, **characterized in that** the internal pivot (120) of the vane is axially slidably mounted in the ball sleeve (160).

7. A turbomachine, such as an aircraft turbojet or turboprop, **characterized in that** it comprises at least one stator stage of variable-pitch vanes as claimed in any one of preceding claims.

## Patentansprüche

1. Leitschaufelstufe für den Verdichter einer Turbomaschine mit einer ringförmigen Reihe von verstellbaren Schaufeln (110), wobei jede Schaufel einen äußeren zylindrischen Drehzapfen (118) aufweist, der die Drehachse der Schaufel bildet und in einem im Wesentlichen radialen Schacht (24) eines Außengehäuses (14) in Eingriff ist, sowie einen inneren, zylindrischen Drehzapfen (120) aufweist, der mittels eines Kugelgelenksystems (160) oder Kippsystems in einer entsprechenden Aufnahme in einem Innenring (12) angebracht ist,
**dadurch gekennzeichnet,**
**dass** der innere Drehzapfen (120) jeder Schaufel sich auf einer Achse (150) erstreckt, die im Wesentlichen parallel zur Drehachse der Schaufel und in Abstand zu dieser Achse verläuft.

2. Leitschaufelstufe nach Anspruch 1,
**dadurch gekennzeichnet,**
**dass** sich die Achse (150) des inneren Drehzapfens (120) jeder Schaufel in einer Ebene befindet, die im Wesentlichen durch die Drehachse (122) der Schaufel und durch die Vorderkante (154) und/oder die Hinterkante (152) der Schaufel verläuft.

3. Leitschaufelstufe nach Anspruch 2,
**dadurch gekennzeichnet,**
**dass** sich die Achse (150) des inneren Drehzapfens (120) jeder Schaufel zwischen der Drehachse (122) der Schaufel und der Hinterkante (152) der Schaufel befindet.

4. Leitschaufelstufe nach Anspruch 2,
**dadurch gekennzeichnet,**
**dass** sich die Achse (150) des inneren Drehzapfens (120) jeder Schaufel zwischen der Drehachse (122) der Schaufel und der Vorderkante (154) der Schaufel befindet.

5. Leitschaufelstufe nach einem der vorherigen Ansprüche,
**dadurch gekennzeichnet,**
**dass** das Kugelgelenksystem eine Kugelgelenkhülse (160) umfasst, die aus einem Werkstoff mit optimalem Reibungskoeffizienten hergestellt ist, wobei sich diese Kugelgelenkhülse in Eingriff mit dem inneren Drehzapfen (120) der Schaufel befindet und in der Aufnahme des Rings sitzt.

6. Leitschaufelstufe nach Anspruch 5,
**dadurch gekennzeichnet,**
**dass** der innere Drehzapfen (120) der Schaufel axial gleitend in der Kugelgelenkhülse (160) angebracht ist.

7. Turbomaschine, wie beispielsweise ein Turboluftstrahltriebwerk oder ein Turbopropeller-Triebwerk eines Flugzeugs,
**dadurch gekennzeichnet,**
**dass** sie mindestens eine Leitschaufelstufe mit verstellbaren Schaufeln nach einem der vorherigen Ansprüche enthält.
